Europäisches Patentamt

European Patent Office

Office européen des brevets

(11) Numéro de publication : **0 477 084 A1**

(19)

## (12) DEMANDE DE BREVET EUROPEEN

(21) Numéro de dépôt : **91402461.7**

(22) Date de dépôt : **17.09.91**

(51) Int. Cl.⁵ : **F16F 1/26,** F16F 1/36,
**B60G 11/42,** B60G 11/10

(30) Priorité : **21.09.90 FR 9011657**

(43) Date de publication de la demande :
**25.03.92 Bulletin 92/13**

(84) Etats contractants désignés :
**DE ES GB IT**

(72) Inventeur : **Soba, Emile**
**153, rue Ordener**
**F-75018 Paris (FR)**

(74) Mandataire : **Ernst-Schonberg, Michel et al**
**REGIE NATIONALE DES USINES RENAULT**
**SA, Sce 0267, 860, quai de Stalingrad**
**F-92109 Boulogne Billancourt Cédex (FR)**

(71) Demandeur : **REGIE NATIONALE DES USINES
RENAULT S.A.**
**34, Quai du Point du Jour**
**F-92109 Boulogne Billancourt Cédex (FR)**

(54) **Articulation souple pour extrémité de ressort à lame.**

(57) Articulation souple pour extrémité de ressort à lame en matériau composite, particulièrement pour véhicule automobile où l'extrémité (23) de la lame de ressort (18) est courbe et amincie pour être maintenue prisonnière entre une fourrure extérieure cylindrique (24) munie d'une ouverture tangentielle (25) par laquelle l'extrémité de la lame de ressort (18) est introduite et un manchon élastique (19) du type possédant un noyau central (21), une fourrure extérieure cylyndrique (22) avec une couche de caoutchouc (20) adhérisé sur le noyau central (21) et sur la fourrure extérieure cylindrique (22).

FIG.4

La présente invention concerne une articulation souple pour l'extremité d'un ressort à lame en matériau composite particulièrement adaptée à la suspension des véhicules automobile.

Le brevet français N°615 958 décrit déjà un tel type de liaison où l'extrémité de la lame d'un ressort métallique ensère un manchon de caoutchouc qui est lui même relié par sa partie centrale au chassis du véhicule. Une telle réalisation permet de filtrer les petits chocs de roulement et d'absorber le déplacement de l'extrémité de la lame lorsque celle ci se déforme sous la charge : ce type d'articulation évite l'emploi d'une jumelle de liaison entre le ressort et le chassis.

L'emploi des matériaux composites pour la fabrication des lames de ressort impose une technologie de liaison différente car il n'est pas possible d'obtenir facilement un "oeil" solide à l'extrémité de la lame afin d'y insérer un bloc de caoutchouc.

On a alors recours à une ferrure soit boulonnée soit sertie sur la lame, avec les inconvenients connus comme :

– Les amorces de rupture dues aux trous sur la lame.

– Les concentrations des contraintes à l'endroit du collier.

L'invention propose une articulation de grande simplicité de fabrication et qui offre des bonnes qualités de robustesse au niveau de la liaison de la lame avec le tampon de caoutchouc.

– La figure 1 représente une articulation actuellement utilisée avec une liaison de la lame par boulon.

– La figure 2 représente une articulation également utilisée actuellement et avec une liaison de la lame par un collier serti.

– La figure 3 représente un type de collier à sertir une articulation du type de la figure 2.

– La figure 4 représente une coupe transversale de l'articulation selon l'invention.

– La figure 5 représente une vue en perspective de l'articulation selon l'invention.

– La figure 6 représente une vue en perspective de la figure selon l'ivention.

– La figure 7 représente une coupe transversale de l'articulation montée sur le chassis du véhicule.

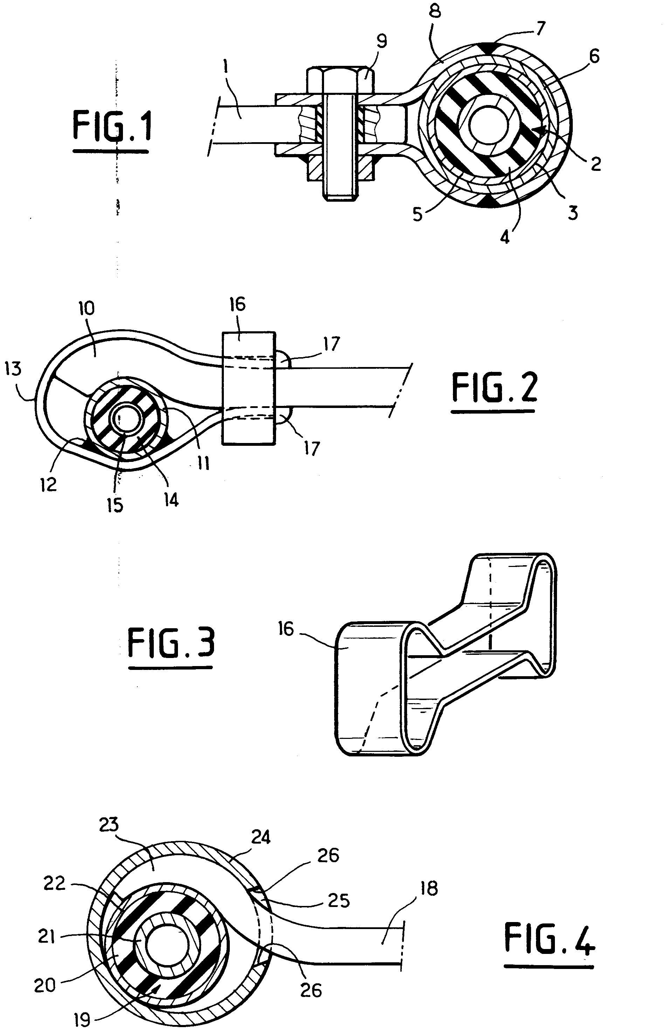

Une articulation classiquement utilisée et représentée sur la figure 1 comprend une lame de ressort en matériau composite 1 et une articulation élastique 2.

Cette articulation est composée d'un tube métallique central 3, d'un élément de caoutchouc 4, et d'une fourrure métallique cylindrique extérieure 5.
L'élément de caoutchouc est adhérisé sur ces deux éléments métalliques (3,5)
Une telle articulation est commercialisée par la société Kléber Industrie sous la désignation "artibloc".

La liaison entre la lame 1 et l'articulation 2 est assurée par une ferrure composée d'un tube 6 dans lequel est emmanché l'articulation élastique 2 et qui solidarisé par soudure 7 avec étrier 8 qui se fixe à l'aide d'au moins un boulon 9 sur l'extrémité de la lame de ressort 1.

La présence du ou des trous de passage du boulon 9 de liaison de la lame avec l'articulation fragilise l'extrémité de ladite lame car les fibres qui constituent l'armature de la lame sont coupées à l'endroit du ou des trous de fixation.

Dans l'articulation représentée sur la figure 2, la lame de ressort en matériau composite 10 a son extrémité formée de façon à prendre appui sur un tube 11 qui est maintenu soudé 12 à une ferrure 13.
Un élément de caoutchouc 14 adhérisé sur un tube métallique central 15 est emmanché dans le tube 11. Ce type d'élément élastique est commercialisé par la société Kléber Industrie sous la désignation "ARTICONE". La ferrure 13 est maintenue sur la lame de ressort 10 par un collier 16 serti. Ce collier est représenté en perspective dans sa forme sertie sur la figure 3.

Selon une forme de réalisation preferentielle, l'articulation objet de l'invention est représentée sur la figure 4.
Elle comprend essentiellement :

– 1 lame de ressort 18 dont l'extrémité 23 est amincie et galbée en forme de point d'interrogation

– 1 articulation élastique 19 composée d'un tube de caoutchouc 20, d'une fourrure métallique tubulaire centrale 21 et d'une fourrure métallique tubulaire extérieure 22. Le tube de caoutchouc 20 est adhérisé sur ces deus éléments (21,22). Une telle articulation est un produit standard commercialisé par la société Kléber Industrie sous la désignation "ARTIBLOC".

– 1 ferrure 24 de liaison de la lame de ressort 18 avec l'articulation élastique 19. Cette ferrure est un tube métallique cylindrique avec une ouverture latérale 25 pratiquée sur la génératrice de ladite ferrure.

La longueur de cette ouverture correspond à la largeur de la lame de ressort 18, et sa largeur est comme on le voit sur la figure 4, notablement plus grande que l'encombrement du profil de ladite lame : ainsi, la lame est prisonnière latéralement mais les arêtes de l'ouverture 25 ne sont pas en contact avec la lame de ressort. La longueur de la fourrure 24 est telle que la section de matière 29 restant de chaque coté de l'ouverture 25 est suffisante pour assurer la bonne resistante mécanique de ladite fourrure lorsque l'on va assembler les éléments entre eux.

Pour assembler l'articulation :

– On introduit l'extrémité 23 de la lame de ressort 18 dans la ferrure 24 par l'ouverture 25

– On emmanche a force suivant une direction axiale, l'articulation élastique 20 à l'intérieur de la ferrure 24 de façon à plaquer ladite extrémité contre la parroi intérieure de ladite ferrure

Les différentes éléments sont ainsi maintenus les uns par rapport aux autres sans aucune pièce de liaison comme des vis ou des colliers ; le montage en est simplifié et moins cher.

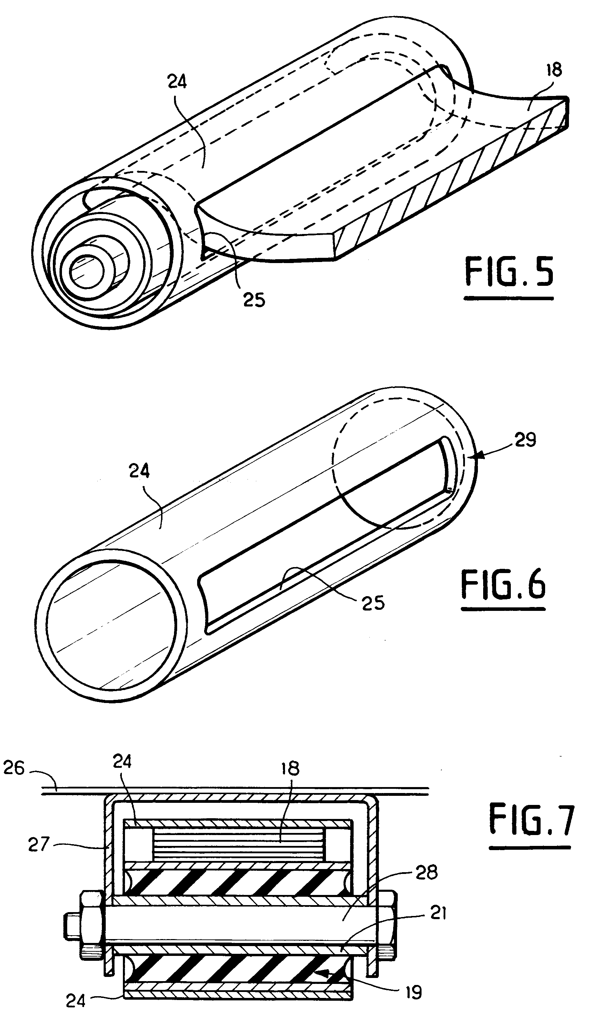

Comme le montre la figure 7, l'articulation ainsi obtenue est reliée au chassis 26 du véhicule par une chape 27 fixée sur ledit chassis. L'articulation est fixée dans cette cape par un axe 28 qui traverse et immobilise la fourrure métallique centrale 21 par rapport à ladite chape.

Ainsi, l'articulation élastique 19 est immobilisée par rapport à la chape 27 donc par rapport au chassis du véhicule et la lame de ressort 18 est immobilisée par rapport au tampon élastique 19 par coincement entre la ferrure 24 et ledit tampon élastique 19.

L'extrémité 23 de la lame de ressort 18 qui est galbée en forme de point d'interrogation et dont l'épaisseur s'amincit régulièrement permet :

    – de présenter une grande surface d'appui de la lame sur l'articulation élastique 19, ce qui assure une bonne répartition des efforts, donc une diminution des contraintes

    – d'assurer un bon maintien dans le sens longitudinal de la lame 18 car celle-ci s'enroule autour de l'articulation élastique 19 et est bloquée par la forme amincie de son extrémité par un effet de coincement entre l'articulation 19 et la ferrure 24

Lorsque les efforts appliqués sur la lame 18 varient, son galbe varie également. La souplesse de l'articulation élastique compense la variation de longueur de la lame provoquée par la variation du galbe : Cette disposition évite l'emploi des "jumelles" utilisées sur certains montage classique.

## Revendications

[1] Articulation souple pour extrémité de ressort à lame en matériau composite, particulièrement pour véhicule automobile, où l'extrémité (23) de la lame de ressort (18) est courbe et est maintenue prisonnière entre une ferrure (24) externe à la lame de ressort (18) et un manchon élastique (19) lui-même fixé à la caisse (26) du véhicule, caractérisé en ce que l'extrémité courbe (23) de la lame de ressort (18) a une épaisseur qui diminue progressivement dans la zone de la courbure, que le manchon élastique (19) est du type possédant un noyau central (21) métallique en forme de tube, avec une fourrure extérieure (22) métallique en forme de tube elle aussi et qui emprisonne une couche de caoutchouc (20) adhérisé sur le noyau central (21) et la fourrure extérieure (22)

[2] Articulation souple suivant la revendication 1 caractérisé en ce que la ferrure (24) présente une ouverture tangentielle (25) d'une longueur sensiblement égale à la largeur de la lame de ressort (18) qui pénètre à l'intérieur de ladite fourrure.

[3] Articulation souple suivant les revendications 1 et 2 caractérisé en ce que l'ouverture tangentielle (25) a une largeur notablement plus grande que l'épaisseur de la lame de ressort (18) qui pénètre à l'intérieur de ladite fourrure.

[4] Articulation souple suivant les revendications 1,2,et 3 caractérisé en ce que la fourrure (24) à une longueur telle qu'il reste de chaque coté de l'ouverture tangentielle (25) des flancs (29) suffisamment larges pour éviter la déformation géométrique de ladite ferrure sous la pression de coincement exercée par le manchon élastique (19).

FIG.1

FIG.2

FIG.3

FIG.4

FIG.5

FIG.6

FIG.7

Office européen
des brevets

**RAPPORT DE RECHERCHE EUROPEENNE**

Numero de la demande

EP 91 40 2461

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DESIGN ENGINEERING<br>Avril 1984, LONDON, GB<br>pages 19 - 21;<br>GKN: 'composite springs mass-produced for commercial vehicles'<br>* figure 2 * | 1 | F16F1/26<br>F16F1/36<br>B60G11/42<br>B60G11/10 |
| A | EP-A-0 146 358 (GKN TECHNOLOGY LTD)<br>* page 3, ligne 24 - page 4, ligne 15; figures 1,2 * | 1 | |
| A | US-A-4 061 364 (GENERAL MOTORS CORP.)<br>* colonne 2, ligne 13 - ligne 47; figures 1-4 * | 1-3 | |
| A,D | FR-A-615 958 (DELAMARE MAZE)<br>* figures 1-4 * | 1 | |
| A | EP-A-0 117 704 (GKN TECHNOLOGY LTD.)<br>* figures 2,4 * | 1 | |
| A | US-A-1 789 725 (THE INLAND MANUFACTURING CO.)<br>* figure 4 * | | DOMAINES TECHNIQUES RECHERCHES (Int. Cl.5) |
| A | GB-A-830 538 (FORD MOTOR CO.) | | F16F<br>B60G |

Le présent rapport a été établi pour toutes les revendications

| Lieu de la recherche | Date d'achèvement de la recherche | Examinateur |
|---|---|---|
| LA HAYE | 05 DECEMBRE 1991 | TSITSILONIS L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

6